(19) Europäisches Patentamt
European Patent Office
Office européen des brevets

(11) **EP 1 556 253 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(21) Anmeldenummer: 03773508.1

(22) Anmeldetag: **13.10.2003**

(51) Int Cl.:
*B60R 16/02* (2006.01)      *H04B 3/54* (2006.01)
*H02G 3/04* (2006.01)

(86) Internationale Anmeldenummer:
**PCT/DE2003/003389**

(87) Internationale Veröffentlichungsnummer:
**WO 2004/037613 (06.05.2004 Gazette 2004/19)**

(54) **VERSORGUNGSLEITUNGSSTRUKTUR**

FEED LINE STRUCTURE

STRUCTURE DE LIGNES D'ALIMENTATION

(84) Benannte Vertragsstaaten:
**DE ES FR**

(30) Priorität: **19.10.2002 DE 10248821**

(43) Veröffentlichungstag der Anmeldung:
**27.07.2005 Patentblatt 2005/30**

(73) Patentinhaber: **ROBERT BOSCH GMBH**
**70442 Stuttgart (DE)**

(72) Erfinder:
• **ENDERS, Thorsten**
**75428 Illingen (DE)**
• **SCHIRMER, Juergen**
**69124 Heidelberg (DE)**
• **STIEGLER, Frank**
**71636 Ludwigsburg (DE)**

• **KUEHN, Timo**
**76470 Oetigheim (DE)**
• **DOSTERT, Klaus**
**67706 Krickenbach (DE)**

(56) Entgegenhaltungen:
EP-A- 0 844 697      DE-A- 10 111 100
US-A- 5 734 658      US-B1- 6 249 060

• STIEGLER F ET AL: "KONZEPT EINER NEUARTIGEN BORDNETZSTRUKTUR FUER DEN EINSATZ VON POWERLINE-KOMMUNIKATION IM KFZ A NOVEL SUPPLY NETWORK ARCHITECTURE FOR POWERLINE COMMUNICATIONS IN AUTOMOBILES" FREQUENZ, SCHIELE UND SCHON GMBH. BERLIN, DE, Bd. 56, Nr. 5/6, Mai 2002 (2002-05), Seiten 126-132, XP001115783 ISSN: 0016-1136

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft eine Versorgungsleitungsstruktur gemäß dem Oberbegriff des Anspruchs 1, der aus dem Aufsatz "Konzept einer neuartigen Bordnetzstruktur für den Einsatz von Powerline-Kommunikation im KFZ", von Frank Stiegler, Klaus Dostert, Jürgen Schirmer und Thorsten Enders, bekannt ist.

Eine derartige Versorgungsleitungsstruktur ist in der Patentanmeldung DE 101 42 410.8 oder EP 2002 00 16 071 der Anmelderin beschrieben.

Eine gattungsgemäße Versorgungsleitungsstruktur soll sowohl der Kommunikation zwischen verschiedenen elektrischen Komponenten, wie z.B. zwischen einem Türsteuergerät und einem Sitzsteuergerät, als auch der Energieversorgung dieser Komponenten dienen. Man spricht hier von "Power Line Communications". Hierfür hat es sich als zweckmäßig erwiesen, den im Stand der Technik vorhandenen Kabelbaum umzustrukturieren derart, dass die Versorgungsleitungen in einer Sternstruktur mit wenigstens einem Sternpunkt einer Sternstruktur mit wenigstens einem Sternpunkt angeordnet sind. Es hat sich bei der bekannten Versorgungsleitungsstruktur die Verwendung von sogenannten "Twisted-Pair"-Leitungen für die Versorgung der Komponenten als vorteilhaft erwiesen. Hierunter werden miteinander verdrillte Doppeladern oder Leiterlitzen verstanden, die eine Verbesserung der Störfestigkeit mit sich bringen und in Abhängigkeit von ihrem Verdrillungsgrad unterschiedliche Wellenwiderstände aufweisen. Da ein Sternpunkt innerhalb eines Leitersystems stets als Parallelschaltung von Widerständen angesehen werden kann, ergibt sich eine sehr niedrige Impedanz für den Sternpunkt, was zu unerwünschten Reflexionen der in einem Versorgungsleitungszweig in Richtung auf den Sternpunkt sich ausbreitenden Welle am Sternpunkt führt. Dieser Effekt kann jedoch durch Beschaltung des Leitungszweigs im Bereich des Sternpunkts unterdrückt werden, was mit der genannten Patentanmeldung DE 101 42 410.8 vorgeschlagen wurde.

Aufgabe und Lösung der Erfindung

Ein weiteres Problem bei der vorstehend beschriebenen Versorgungsleitungsstruktur ist jedoch die Übertragung hoher Ströme. Werden die vorerwähnten "Twisted-Pair"-Leitungen verwendet, so begrenzt ihr beschränkter Leitungsquerschnitt aufgrund der praktischen Verdrillbarkeit die übertragbare Stromstärke. Ferner ist die Herstellung von "Twisted-Pair"-Leitungen mit großem Querschnitt aufwendig.

Es ist daher eine Aufgabe der vorliegenden Erfindung, bei gattungsgemäßen Versorgungsleitungsstrukturen auch große Versorgungsströme übertragen zu können.

Diese Aufgabe wird ausgehend von der genannten Versorgungsleitungsstruktur erfindungsgemäß dadurch gelöst, dass zumindest ein Teil der Versorgungsleitungen eine koaxiale Anordnung mehrerer äußerer Leitungslitzen um eine zentrale Leitungslitze herum umfasst.

Vorteile der Erfindung

Die Erfindung schlägt also vor, zur Versorgung von einzelnen Hochstromverbrauchern oder zur Versorgung von zentralen Verteilerknoten, also Sternpunkten innerhalb der Versorgungsleitungsstruktur, eine koaxiale Anordnung von Leitungslitzen zur Bildung des betreffenden Abschnitts der Versorgungsleitung zu verwenden. Es ergibt sich auf diese Weise ein sehr großer Leitungsquerschnitt, der die Übertragung hoher Ströme, auch weit oberhalb von 10 A, zur Energieversorgung gestattet, was mit einzelnen "Twisted-Pair"-Leitungen nicht möglich wäre, da die hierfür benötigten Leitungsquerschnitte eine Verdrillung der Leitungslitzen nicht mehr wirtschaftlich zuließen.

Durch die Verwendung einer koaxialen Anordnung mehrerer äußerer Litzen um eine zentrale Leitungslitze herum kann auch eine Selektivität, beispielsweise mit Hilfe eines zentralen Sicherungskastens, realisiert werden. Dies würde eine Anzahl von "Twisted-Pair"-Leitungen erfordern, die dann aber wieder gebündelt verlegt werden müssten, was als aufwendig anzusehen ist.

Die erfindungsgemäß vorgeschlagene Anordnung besteht aus einer Anzahl von äußeren Litzen von insbesondere gleichem Querschnitt und einer zentralen Litze, der sogenannten Führungslitze, um die die äußeren Litzen herum angeordnet beziehungsweise gewickelt sind. Es ist aber auch denkbar, dass für die Führungslitze eine Litze mit größerem Querschnitt als bei den äußeren Litzen verwendet wird. Ebenso ist es möglich, für die Ausbildung der Führungslitze ähnlich einem geflochtenen oder geschlagenen Drahtseil mehrere Litzen zu verwenden. Es hat sich als vorteilhaft erwiesen, wenn um die zentrale Führungslitze herum 5 - 10, insbesondere 5 - 8, äußere Leitungslitzen vorgesehen sind. Dabei haben sich 6 äußere Leitungslitzen als besonders zweckmäßig erwiesen. Gute Erfahrungen wurden mit Leitungslitzen eines Querschnitts von 2 - 3 mm$^2$, insbesondere von etwa 2,5 mm$^2$, erzielt.

Es erweist sich in Weiterbildung der Erfindung von besonderer Bedeutung, wenn die äußeren Leitungslitzen mittels Kondensatoren gegeneinander hochfrequenztechnisch kurzgeschlossen sind, und zwar vorzugsweise an ihren beiden Enden. Auf diese Weise verhält sich der so gebildete Versorgungsleitungsabschnitt für HF-Datensignale ähnlich wie eine Koaxial-Leitung.

Da die zentrale Leitungslitze oder Führungslitze im Inneren der koaxialen Anordnung im Allgemeinen einen kleineren Querschnitt aufweist als die Summe der Querschnitte der äußeren Leitungslitzen, erweist es sich als vorteilhaft, wenn bei Übertragung hoher Ströme die Rückführung von Gleichstromkomponenten über die Karosserie erfolgen kann. Hierfür erweist es sich als vorteilhaft, wenn die zentrale Leitungslitze, vorzugsweise an ihren beiden Enden, mit der Karosserie verbunden ist.

Solchenfalls können sich aber in nachteiliger Weise Gleichtaktströme über die Karosserie ausbilden. Dem kann aber vorteilhafterweise durch Verwendung einer induktiven Kopplung zwischen den äußeren Leitungslitzen und der zentralen Leitungslitze entgegengewirkt werden. Hierfür kann ein ringförmiger Kern mit oder aus ferritischem Material verwendet werden, welcher einfach über den betroffenen Abschnitt der Versorgungsleitung geschoben wird, so dass sich die Versorgungsleitung durch diesen ringförmigen Kern hindurcherstreckt. Es wird auf diese Weise eine "Common-mode-Spule" gebildet. Um die Impedanz für Gleichtaktströme weiter zu erhöhen, besteht die Möglichkeit, die koaxiale Anordnung von Leitungslitzen wenigstens einmal oder mehrmals um den ringförmigen Kern zu legen, so dass die Versorgungsleitung eine oder mehrere Schlaufen durch und um den ringförmigen Kern bildet.

Es hat sich gezeigt, dass ein Wellenwiderstand der koaxialen Anordnung von Leitungslitzen von 35 - 50 Ohm, insbesondere um 40 Ohm, realisiert werden kann.

Mit der erfindungsgemäßen Versorgungsleitungsstruktur lässt sich bei einer Leitungslänge von 5 m im Frequenzbereich zwischen 100 und 250 MHz ein Übertragungsverhalten von -1,4 dB bis -4,4 dB, vorteilhafterweise von -1,9 dB bis -3,7 dB, erreichen, was als besonders geeignet anzusehen ist. Es lassen sich große Ströme übertragen.

Zur Unterdrückung von Gleichtaktströmen an Übergängen der zentralen Leitungslitze zur Karosserie oder der äußeren Leitungslitzen zu weiteren Zweigen mit insbesondere "Twisted-Pair"-Leitungen bewährt sich die Verwendung von ringförmigen Kernen mit ferritischem Material als "Common-mode-Spulen".

Zeichnung

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung oder Darstellung in der Beschreibung oder in der Zeichnung.

In der Zeichnung zeigen:

Figur 1:  eine schematische Darstellung einer koaxialen Anordnung von Leitungslitzen einer Versorgungsleitung;

Figur 2:  eine schematische Darstellung von HF-technisch kurzgeschlossenen äußeren Leitungslitzen;

Figur 3:  eine schematische Darstellung der Verwendung eines ringförmigen Ferritkerns als Common-mode- Spule;

Figur 4:  eine schematische Darstellung der Verbindung eines erfindungsgemäßen Leitungsabschnitts mit einer Metallplatte (Karosserie);

Figur 5:  ein Ersatzschaltbild der Anordnung nach Figur 4 mit einer Common-mode-Spule;

Figur 6:  das Übertragungsverhalten einer erfindungsgemäßen Versorgungsleitung mit und ohne Common-mode-Spule; und

Figur 7:  das Übertragungsverhalten einer 5 m langen erfindungsgemäßen Versorgungsleitung (messtechnisch ermittelt und modelliert).

Beschreibung der Ausführungsbeispiele

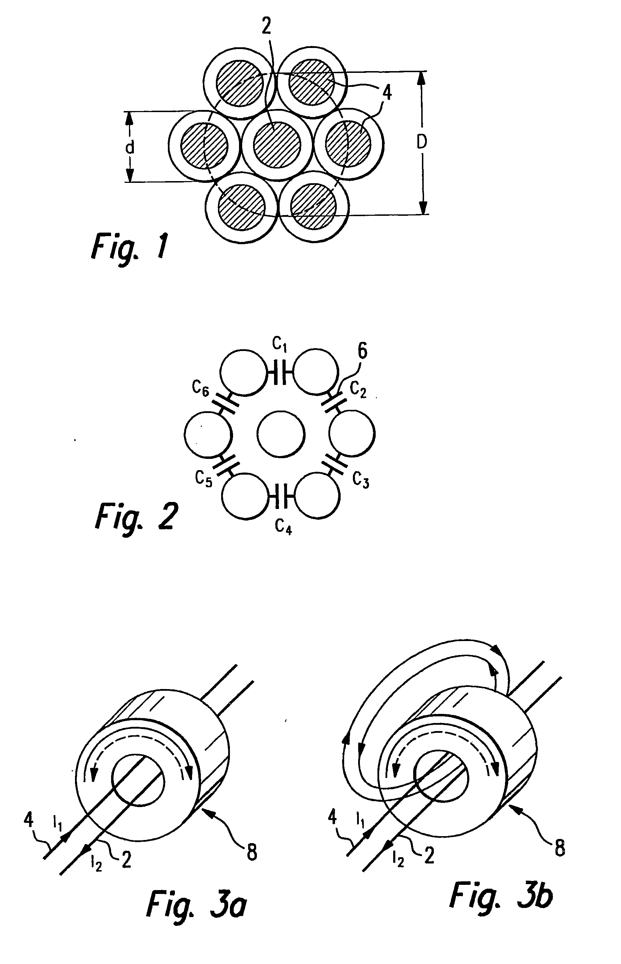

Figur 1 zeigt im Schnitt die erfindungsgemäße koaxiale Anordnung von sieben Leitungslitzen gleichen Querschnitts von je 2,5 mm$^2$, wobei sechs äußere Leitungslitzen 4 um eine zentrale Leitungs- oder Führungslitze 2 herum angeordnet sind. Das Maß d beträgt 1,78 mm und das Maß D beträgt 6,8 mm. Bei der Verwendung dieser Anordnung in einer Versorgungsleitungsstruktur zur Energieversorgung der elektrischen Komponenten eines Kraftfahrzeugs sowie zur Übertragung von Informationen zwischen zumindest einigen dieser elektrischen Komponenten liegen die äußeren Leitungslitzen 4 auf Plus-Potential und die zentrale Leitungslitze 2 auf Minus-Potential. Die sechs äußeren Litzen 4 können an einem zentralen Sicherüngskasten, z.B. im Motorraum, einzeln abgesichert werden. Das andere Ende dieser erfindungsgemäßen Versorgungsleitung kann mit einem Verteilerkasten an einem anderen zentralen Punkt im Kraftfahrzeug, beispielsweise unter dem Rücksitz, verbunden werden. Dieser zentrale Punkt bildet dann einen Sternpunkt der Versorgungsleitungsstruktur.

Wie aus Figur 2 ersichtlich und dort schematisch darge-stellt, sind die äußeren Litzen 4 vorzugsweise an beiden Enden der koaxialen Leitungsanordnung mit Hilfe von Kondensatoren 6 HF-technisch kurzgeschlossen, so dass sich die erfindungsgemäße Anordnung zur Bildung einer Versorgungsleitung für HF-Datensignale ähnlich wie eine Koaxialleitung verhält.

Insbesondere bei Übertragung hoher Ströme stellt sich das Problem der Rückführung der Gleichstromanteile. Wie eingangs angedeutet, erweist es sich als vorteilhaft, besonders für hohe Ströme eine Rückführung der Gleichstromanteile über die Karosserie durchzuführen. Hierfür werden beide Enden der zentralen Leitungs- oder Führungslitze 2 der erfindungsgemäßen Anordnung zusätzlich mit der nicht dargestellten Karosserie verbunden. Dies bedingt jedoch das Auftreten von Gleichtaktströmen über die Karosserie. Dem wird - wie ebenfalls eingangs ausgeführt - durch Verwendung eines ringförmigen Kerns mit oder aus ferritischem Material entgegengewirkt. Ein solcher ringförmiger Kern 8 ist in Figur 3a dargestellt, wobei zugleich schematisch eine äußere Leitungslitze 4, die einen Strom $I_1$ führt und die zentrale Leitungslitze 2, die einen Strom $I_2$ führt, dargestellt ist. Der ringförmige Kern 8 ist einfach über die koaxiale Anordnung der Leitungslitzen 2, 4 geschoben, so dass diese koaxiale Anordnung beziehungsweise der erfindungsgemäß ausgebildete Abschnitt der betrachteten Versorgungsleitung sich durch den ringförmigen Kern 8 hindurcherstreckt.

Zur Erhöhung der Impedanz für den Gleichtaktstromanteil wäre es auch denkbar und vorteilhaft, wenn sich der betrachtete Versorgungsleitungsabschnitt schlaufenförmig einmal oder mehrmals um den Querschnitt des ringförmigen Kerns 8 herum erstreckt, so wie dies schematisch in Figur 3b angedeutet ist.

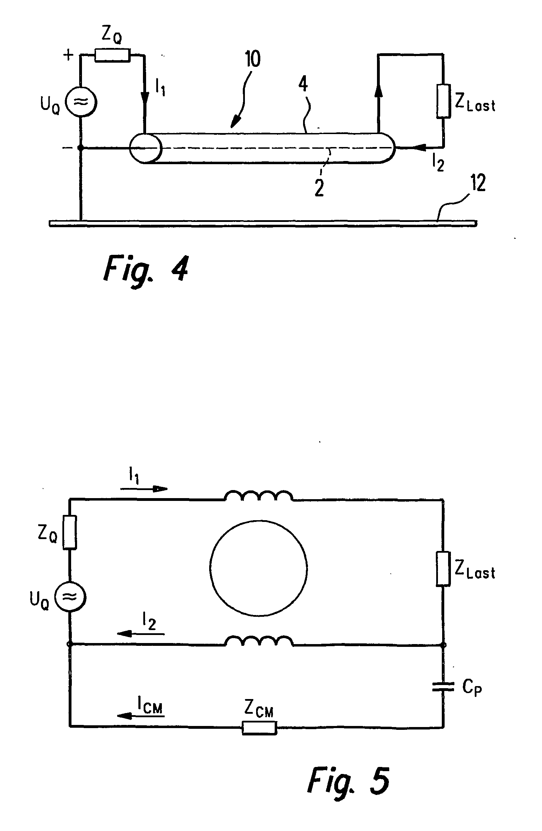

Zur Verdeutlichung des Einflusses des ringförmigen Kerns 8, also der Common-mode-Spulenkopplung, sei auf Figur 4 verwiesen, die schematisch den Anschluss eines erfindungsgemäßen Abschnitts einer Versorgungsleitung 10 mit einem Generator $U_Q$ und einer die Karosserie darstellenden Metallplatte 12 zeigt. Ein Ersatzschaltbild ist in Figur 5 dargestellt.

Auf der einen Seite der Versorgungsleitung 10 ist der Generator $U_Q$ angeschlossen. Auf der anderen Seite der Versorgungsleitung 10 ist zwischen den äußeren Leitungslitzen 4 und der zentralen Leitungslitze 2 ein Lastwiderstand $Z_{Last}$ vorgesehen. Wird nun ungünstigerweise das Potential, auf dem sich der Innenleiter, also die zentrale Leitungslitze 2, befindet, zusätzlich noch mit der Metallplatte 12 verbunden, so befinden sich demzufolge der Schirm der so gebildeten Koaxialleitung, also die äußeren Leitungslitzen 4, und die Metallplatte 12 auf unterschiedlichem Potential. Durch parasitäre Kapazitäten, die im Ersatzschaltbild der Figur 5 mit $C_p$ zwischen Schirm und Metallplatte 12 dargestellt sind, wird ein Stromkreis geschlossen und ein Gleichtaktstrom fließt. Ergänzt man nun auf der Generatorseite der Versorgungsleitung 10 einen ringförmigen Kern 8 aus ferritischem Material, so wie dies vorausgehend beschrieben wurde, so kann dieser Gleichtaktstrom weitgehend unterbunden werden, da die Impedanz $Z_{CM}$ der durch den ringförmigen Kern 8 gebildeten Common-mode-Spule die ursprüngliche Impedanz des Stromkreises deutlich heraufsetzt. Um ein besseres Verständnis der Gegebenheiten zu vermitteln, wird auf einen HF-Ansatz verzichtet. Für das Ersatzschaltbild der Figur 5 wurde daher angenommen, dass die Leitungslänge "kurz" im Verhältnis zur Wellenlänge ist. Daher kann das Ersatzschaltbild unter Verwendung diskreter Bauelemente angefertigt werden.

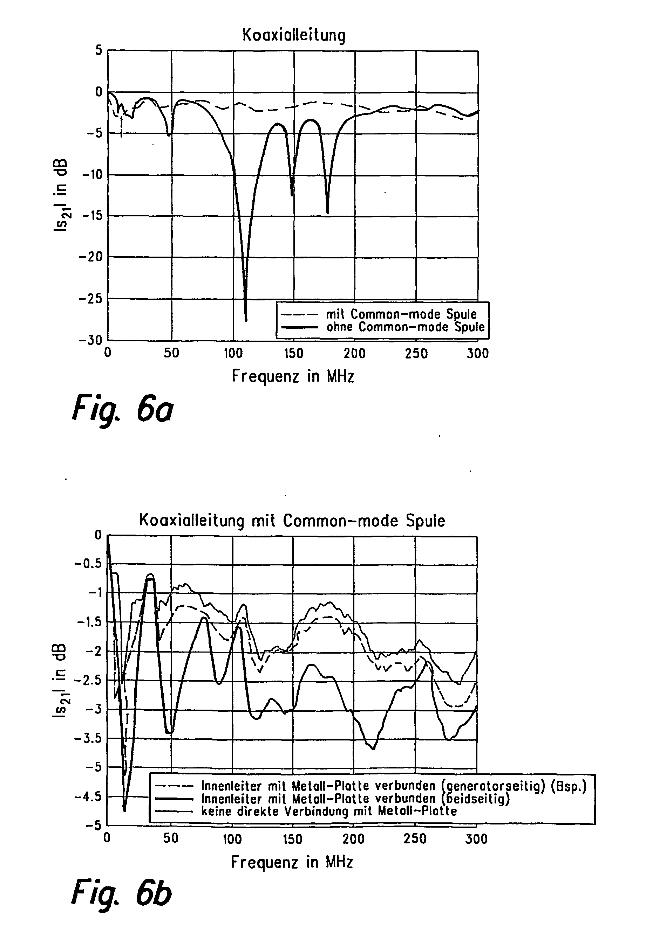

Die Figuren 6a und 6b zeigen die Messergebnisse des betrachteten Szenarios bei Verwendung einer 3 m langen Versorgungsleitung 10. Die Messung wurde in Abbildung 6a sowohl für den Fall mit als auch ohne induktive Kopplung durch einen ringförmigen ferritischen Kern durchgeführt.

Es sind deutliche Vorteile bei Verwendung des ringförmigen Kerns zu erkennen.

Das Schaubild nach Figur 6b zeigt Messungen bei unterschiedlichen Verbindungen zur Metallplatte 12. Hierfür wurde zunächst die Versorgungsleitung 10 selbst vermessen, indem die Verbindung zur Metallplatte 12 getrennt wurde. Außerdem ist zusätzlich noch derjenige Zustand der Verbindung der zentralen Leitungslitze 2 der Versorgungsleitung 10 sowohl auf der Generatorseite als auch auf der Lastseite mit der Metallplatte 12 dargestellt. Dies stellt eigentlich den Sonderfall für $C_p \rightarrow \infty$ beziehungsweise eine Überbrückung des Kondensators $C_p$ dar. Als Anwendung ist hierbei der zusätzliche Gleichstrompfad über die Karosserie zu nennen, der bereits erwähnt wurde. Schließlich ist zum direkten Vergleich auch noch eine Verbindung zur Metallplatte 12 nur auf der Generatorseite dargestellt. Dabei wurde bei sämtlichen Messungen ein ringförmiger Kern (Common-mode-Spule) auf der Generatorseite der Versorgungsleitung 10 verwendet. Aus den Messergebnissen ist zu erkennen, dass sich die Kurven nur um circa 2 dB voneinander unterscheiden. Somit ist die Realisierung eines zusätzlichen Gleichstrompfads über die Karosserie durchaus realisierbar, ohne dass dies negative Auswirkungen auf das Übertragungsverhalten des Versorgungsleitungsabschnitts 10 innerhalb der Versorgungsleitungsstruktur hätte.

Zum Wellenwiderstand:

Zur Berechnung des Wellenwiderstands einer koaxialen Leitungsanordnung wird die folgende Formel herangezogen:

$$Z_L = \frac{60\Omega}{\sqrt{\varepsilon_{r,Isolierung}}} \cdot \ln\left(\frac{D}{d}\right)$$

Bei εr, Isolierung handelt es sich um die Dielektrizitätskonstante des verwendeten IsolatorMaterials. D und d sind aus Abbildung 1 ersichtlich.

Da der Mantel beziehungsweise Schirm der koaxialen Leitungsanordnung nicht im ganzen Umfang einen konstanten Abstand zur Führungslitze besitzt, wird in Gleichung 1 für D ein mittlerer Durchmesser verwendet.

Bei Verwendung einer PVC-isolierten Kupferleitung mit einem Querschnitt von 2,5 mm$^2$ nach in Abbildung 1 vorgestelltem Beispiel mit einer Führungs- und sechs Umfangs-Litzen ergibt sich nach Gleichung 1 ein berechneter Wellenwiderstand von

$$Z_{L,berechnet} = 42,99\Omega$$

mit d=1,78 mm und D=6,8 mm.

Messtechnisch ergab sich ein Wellenwiderstand von

$$Z_{L,gemessen} \approx 40\Omega,$$

womit die oben angegebene Formel bestätigt werden konnte.

Zum Dämpfungsmaß

Entsprechend den Beziehungen für eine koaxiale Leitungsanordnung kann das Dämpfungsmaß durch Leiterverluste $\alpha$L einer koaxialen Leitungsanordnung entsprechend folgender Beziehung angenähert werden:

$$\alpha_L = \sqrt{\frac{\mu_0 \cdot \mu_{r,Leiter} \cdot \rho}{\pi}} \cdot \frac{1+\dfrac{D}{d}}{2 \cdot D \cdot Z_L} \cdot \sqrt{f}$$

Für das Dämpfungsmaß der dielektrischen Verluste $\alpha$D kann analog zum obigen Vorgehen durch die Gleichung

$$\alpha_D = \pi \cdot \sqrt{\varepsilon_{r,Isolierung}} \cdot \frac{\tan\delta}{c_0} \cdot f \quad.$$

angenähert werden.

Zum Kapazitätsbelag

Der Kapazitätsbelag C' einer koaxialen Leitungsanordnung kann mit der folgenden Gleichung angenähert

werden:

$$C' = \frac{2 \cdot \pi \cdot \varepsilon_0 \cdot \varepsilon_{r,Isolierung}}{\ln\left(\dfrac{D}{d}\right)}$$

Zur Überprüfung der oben getroffenen Aussagen wurde das Übertragungsverhalten einer 5 m langen koaxialen Leitungsanordnung, bestehend aus sieben Litzen mit gleichem Querschnitt von 2,5 mm$^2$ untersucht und anhand der oben vorgestellten Mäherungsformeln modelliert. Für die Dielektrizitätskonstante $\varepsilon r$ wurde hierbei $_{\varepsilon r}$=3,5 und für den Verlustfaktor $\tan_\delta$ von Kupfer $\tan_\delta$=15·10$^{-3}$ verwendet. Der Wellenwiderstand $Z_L$ wurde entsprechend Gleichung 1 mit $Z_L$=40Ω angenähert. Die Messung selbst wurde unter der Bezugsimpedanz $Z_0$=40Ω angenähert. Die Messung selbst wurde aber unter der Bezugsimpedanz $Z_0$=39Ω durchgeführt.

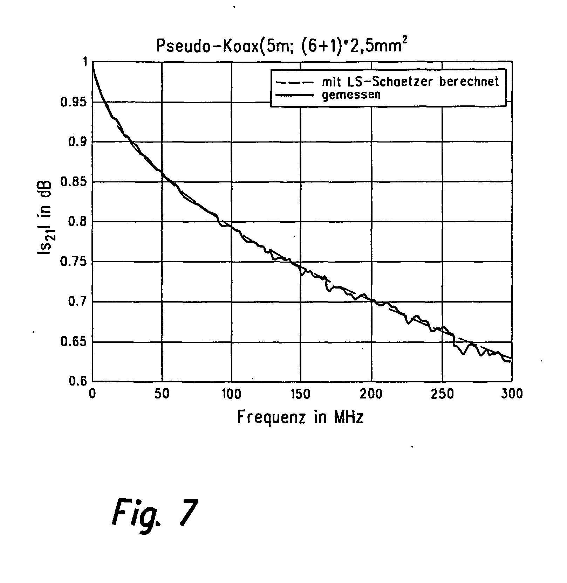

Schließlich ist in Figur 7 sowohl die messtechnisch ermittelte als auch die modellierte Übertragungsfunktion dargestellt. Die modellierte Übertragungsfunktion wurde unter Zugrundelegung der obigen Beziehungen mittels eines Least-Squares-Schätzers berechnet. Man erkennt die hervorragende Übereinstimmung von Messung und Simulation.

## Patentansprüche

1. Versorgungsleitungsstruktur zur Energieversorgung von elektrischen Komponenten eines Kraftfahrzeugs und zur parallelen Übertragung von Informationen zwischen zumindest einigen der elektrischen Komponenten über die Versorgungsleitungsstruktur im Rahmen einer Powerline-Kommunikation, wobei die Versorgungsleitungen in einer Sternstruktur mit wenigstens einem Sternpunkt angeordnet sind, **dadurch gekennzeichnet, dass** zumindest ein Teil der Versorgungsleitungen (10) eine koaxiale Anordnung mehrerer äußerer Leitungslitzen (4) um eine zentrale Leitungslitze (2) herum umfasst, wobei die äußeren Leitungslitzen (4) relativ zu der zentralen Leitungslitze (2) isoliert sind.

2. Versorgungsleitungsstruktur nach Anspruch 1, **dadurch gekennzeichnet, dass** die äußeren Leitungslitzen (4) mittels Kondensatoren (6) gegeneinander hochfrequenztechnisch kurzgeschlossen sind.

3. Versorgungsleitungsstruktur nach Anspruch 2, **dadurch gekennzeichnet, dass** die äußeren Leitungslitzen (4) an beiden Enden der betrachteten Versorgungsleitung (10) mittels Kondensatoren (6) gegeneinander hochfrequenztechnisch kurzgeschlossen sind.

4. Versorgungsleitungsstruktur nach Anspruch 1, **dadurch gekennzeichnet, dass** die zentrale Leitungslitze (2), vorzugsweise an ihren beiden Enden, mit der Karosserie (12) verbunden ist.

5. Versorgungsleitungsstruktur nach Anspruch 1, **dadurch gekennzeichnet, dass** sich eine Versorgungsleitung (10) durch einen ringförmigen Kern (8) mit ferritischem Material hindurcherstreckt.

6. Versorgungsleitungsstruktur nach Anspruch 5, **dadurch gekennzeichnet, dass** die Versorgungsleitung (10) den ringförmigen Kern (8) wenigstens einmal umschließt.

7. Versorgungsleitungsstruktur nach Anspruch 5 oder 6, **dadurch gekennzeichnet, dass** sich die versorgungsleitung (10) generatorseitig durch einen ringförmigen Kern (8) mit ferritischem Material hindurcherstreckt.

8. Versorgungsleitungsstruktur nach Anspruch 1, **dadurch gekennzeichnet, dass** eine zentrale Leitungslitze (2) und fünf bis zehn, insbesondere fünf bis acht, äußere Leitungslitzen vorgesehen sind.

9. Versorgungsleitungsstruktur nach Anspruch 1, **dadurch gekennzeichnet, dass** die koaxiale Anordnung der mehreren äußeren Leitungslitzen (4) um die zentrale Leitungslitze (2) herum einen Wellenwiderstand von 35 bis 50 Ohm aufweist.

10. Versorgungsleitungsstruktur nach Anspruch 1, **dadurch gekennzeichnet, dass** die koaxiale Anordnung der mehreren äußeren Leitungslitzen (4) um die zentrale Leitungslitze (2) herum im Frequenzbereich zwischen 100 und 250 MHz ein Übertragungsverhalten von -1,4 dB bis -4,4 dB, insbesondere von -1,9 dB bis -3,7 dB, aufweist.

## Claims

1. Feed line structure for supplying power to electrical components of a motor vehicle and for the parallel transmission of information between at least a number of the electrical components via the feed line structure within the scope of powerline communications, wherein the feed lines are arranged in a star structure with at least one star point, **characterized in that** at least some of the feed lines (10) comprise a coaxial arrangement of a plurality of external line stranded conductors (4) around a central line stranded conductor (2), wherein the outer line stranded conductors (4) are insulated from the central line stranded conductor (2).

2. Feed line structure according to Claim 1, **characterized in that** the outer line stranded conductors (4) are short-circuited with respect to one another at high frequencies by means of capacitors (6).

3. Feed line structure according to Claim 2, **characterized in that** the outer line stranded conductors (4) are short-circuited with respect to one another at high frequencies at both ends of the feed line (10) under consideration, by means of capacitors (6).

4. Feed line structure according to Claim 1, **characterized in that** the central line stranded conductor (2) is connected to the vehicle bodywork (12), preferably at both ends of said central line stranded conductor (2).

5. Feed line structure according to Claim 1, **characterized in that** a feed line (10) extends through an annular core (8) with ferritic material.

6. Feed line structure according to Claim 5, **characterized in that** the feed line (10) surrounds the annular core (8) at least once.

7. Feed line structure according to Claim 5 or 6, **characterized in that** the feed line (10) extends on the generator side through an annular core (8) with ferritic material.

8. Feed line structure according to Claim 1, **characterized in that** a central line stranded conductor (2) and five to ten, in particular five to eight, outer line stranded conductors are provided.

9. Feed line structure according to Claim 1, **characterized in that** the coaxial arrangement of the plurality of outer line stranded conductors (4) around the central line stranded conductor (2) has a characteristic impedance of 35 to 50 ohm.

10. Feed line structure according to Claim 1, **characterized in that** the coaxial arrangement of the plurality of outer line stranded conductors (4) around the central line stranded conductor (2) has, in the frequency range between 100 and 250 MHz, a transmission behaviour of -1.4 dB to -4.4 dB, in particular from -1.9 dB to -3.7 dB.

## Revendications

1. Structure de conducteurs d'alimentation destinée à alimenter en énergie des composants électriques d'un véhicule automobile et pour transmettre en parallèle des informations entre au moins certains des composants électriques par la structure de conducteurs d'alimentation dans le cadre d'une communication par ligne d'alimentation en énergie, les conducteurs d'alimentation étant disposés dans une structure en étoile qui présente au moins un point d'étoile, **caractérisée en ce que** au moins une partie des conducteurs d'alimentation (10) comprend un agencement coaxial de plusieurs tresses conductrices extérieures (4) disposées autour d'une tresse conductrice centrale (2), les tresses conductrices extérieures (4) étant isolées vis-à-vis de la tresse conductrice centrale (2).

2. Structure de conducteurs d'alimentation selon la revendication 1, **caractérisée en ce que** les tresses conductrices extérieures (4) sont mises en court-circuit mutuel à haute fréquence au moyen de condensateurs (6).

3. Structure de conducteurs d'alimentation selon la revendication 2, **caractérisée en ce que** les tresses conductrices extérieures (4) sont mises en court-circuit mutuel à haute fréquence au moyen de condensateurs (6) disposés aux deux extrémités du conducteur d'alimentation (10) concerné.

4. Structure de conducteurs d'alimentation selon la revendication 1, **caractérisée en ce que** la tresse conductrice centrale (2) est reliée à la carrosserie (12) de préférence par ses deux extrémités.

5. Structure de conducteurs d'alimentation selon la revendication 1, **caractérisée en ce qu'**un conducteur d'alimentation (10) traverse une âme annulaire (8) présentant un matériau ferritique.

6. Structure de conducteurs d'alimentation selon la revendication 5, **caractérisée en ce que** le conducteur d'alimentation (10) entoure au moins une fois l'âme annulaire (8).

7. Structure de conducteurs d'alimentation selon la revendication 5 ou 6, **caractérisée en ce que** le conducteur d'alimentation (10) traverse côté générateur une âme annulaire (8) contenant un matériau ferritique.

8. Structure de conducteurs d'alimentation selon la revendication 1, **caractérisée en ce qu'**elle présente une tresse conductrice centrale (2) et de cinq à dix et en particulier de cinq à huit tresses conductrices extérieures.

9. Structure de conducteurs d'alimentation selon la revendication 1, **caractérisée en ce que** l'agencement coaxial des différentes tresses conductrices extérieures (4) autour de la tresse conductrice centrale (2) présente une résistance ondulatoire de 35 à 50 Ohm.

10. Structure de conducteurs d'alimentation selon la revendication 1, **caractérisée en ce que** dans une plage de fréquence comprise entre 100 et 250 MHz, l'agencement coaxial des différentes tresses extérieures conductrices (4) autour de la tresse conductrice centrale (2) présente un comportement de transmission de -1,4 dB à -4,4 dB et en particulier de -1,9 dB à -3,7 dB.

Fig. 1

Fig. 2

Fig. 3a

Fig. 3b

Fig. 4

Fig. 5

## Koaxialleitung

**Fig. 6a**

## Koaxialleitung mit Common—mode Spule

**Fig. 6b**

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10142410
- EP 20020016071 A